(19) Europäisches Patentamt
European Patent Office
Office européen des brevets

(11) **EP 3 153 331 B1**

(12) **EUROPEAN PATENT SPECIFICATION**

(45) Date of publication and mention
of the grant of the patent:
**28.08.2019 Bulletin 2019/35**

(51) Int Cl.:
**B60C 9/00** *(2006.01)*  **B60C 9/08** *(2006.01)*
**B60C 9/04** *(2006.01)*  **D02G 3/48** *(2006.01)*

(21) Application number: **15803500.6**

(22) Date of filing: **02.06.2015**

(86) International application number:
**PCT/JP2015/065903**

(87) International publication number:
**WO 2015/186703 (10.12.2015 Gazette 2015/49)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.06.2014 JP 2014118099**

(43) Date of publication of application:
**12.04.2017 Bulletin 2017/15**

(73) Proprietor: **Bridgestone Corporation
Tokyo 104-8340 (JP)**

(72) Inventors:
• **OYAMA Yuji
Tokyo 104-8340 (JP)**

• **ISOE Shinsuke
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 2 151 332      EP-A1- 2 186 652
WO-A2-2014/066754   JP-A- 2000 185 512
JP-A- 2005 001 619    JP-A- 2009 035 131
JP-A- 2009 035 131    JP-A- 2009 161 033
JP-A- 2013 154 766    JP-B1- 5 494 894
JP-B1- 5 494 894      JP-B2- 3 884 156**

**Description**

TECHNICAL FIELD

The present invention relates to a pneumatic tire (hereinafter, also simply referred to as "tire"), and more specifically, to a pneumatic tire in which a cord including an aramid fiber is used for a reinforcing cord for a carcass ply, and the cut resistance, the steering stability, and the light-weightness are improved.

BACKGROUND ART

In general, a pneumatic tire has a structure which has a carcass composed of a carcass ply extending toroidally between a pair of bead portions as a skeleton, and in which a tread portion is reinforced by arranging a belt layer formed by rubberizing a variety of reinforcing elements or a belt reinforcing layer on the outer circumference of the skeleton. Among others, polyethylene terephthalate (PET) which is a polyester fiber or rayon which is a cellulose fiber is conventionally mainly used for a reinforcing cord of a carcass ply.

In recent years, for the purpose of reducing the number of carcass plies while maintaining the casing strength, application of an aramid fiber to a reinforcing cord of a carcass ply is also studied. For example, Patent Document 1 proposes a run-flat tire having a carcass ply formed by coating an aramid fiber cord arranged with an angle of from 45 to 90° with respect to the tire circumferential direction with a topping rubber. In this run-flat tire, when the upper twist coefficient T of the aramid fiber cord is in the range of from 0.50 to 0.70, the fatigue resistance of the aramid fiber cord is improved, thereby improving the run-flat durability.

RELATED ART DOCUMENT

PATENT DOCUMENT

Patent Document 1: Japanese Unexamined Patent Application Publication No. 2009-137446 Reference is also made to JP-B-3884156, EP-A-2186652 and JP 5-494894.

A tire according to the preamble of claim 1 is known from EP 2 151 332 A1.

SUMMARY OF THE INVENTION

PROBLEMS TO BE SOLVED BY THE INVENTION

However, although Patent Document 1 examines the run-flat durability, other performances such as cut resistance and steering stability are not referred to. Therefore, the other performances in the case of using an aramid fiber cord as a reinforcing cord of a carcass ply are not necessarily sufficiently examined, and actually, there is room for consideration. In recent years, there is an increasing importance for environmental performance, and needs for reducing the weight of a tire are also increasing. In order to reduce the weight of a tire, usually, rubber is reduced or the number of reinforcing member is reduced, and at the same time, accompanying deterioration of other performances such as durability of the tire should be avoided.

Accordingly, an object of the present invention is to provide a pneumatic tire in which a cord including an aramid fiber is used for a reinforcing cord for a carcass ply, and the cut resistance, the steering stability, and the light-weightness are improved.

MEANS FOR SOLVING THE PROBLEMS

In order to solve the above-described problems, the present inventors intensively studied to find that the above-described problems can be solved by making the physical properties and the end count a cord including an aramid fiber which is a reinforcing cord of a carcass ply satisfy a predetermined relationship, thereby completing the present invention.

That is, a pneumatic tire according to the present invention is a pneumatic tire comprising a carcass composed of at least one carcass ply as a skeleton, characterized in that
a reinforcing cord of the carcass ply comprises an aramid fiber, and
the upper twist coefficient T represented by the following formula:

$$T = N \times 10^{-3} \text{ x } \sqrt{\{(0.125 \times D/2)/\rho\}}$$

(in the formula, N represents the twist count (count/10 cm) of the cord, D represents the total fineness of the cord, and ρ represents the density of the cord) is 0.5 or higher, the total fineness is 1,400 dtex or lower, the end count of the reinforcing cord in the carcass ply is 55 counts /5 cm or larger and the ratio of the cross-section of the reinforcing cord to the cross-section of the carcass ply in the cord perpendicular direction is from 50 to 80%. In a tire according to the present invention, preferably, the upper twist coefficient is from 0.5 to 0.8. Still further, in a tire according to the present invention, preferably, the end count is 70 counts /5 cm or larger. In a tire according to the present invention, preferably, the reinforcing cord is composed of a yarn having from 500 dtex to less than 700 dtex.

EFFECTS OF THE INVENTION

According to the present invention, a pneumatic tire in which a cord including an aramid fiber is used for a reinforcing cord for a carcass ply, and the cut resistance, the steering stability, and the light-weightness are improved can be provided.

BRIEF DESCRIPTION OF THE DRAWING

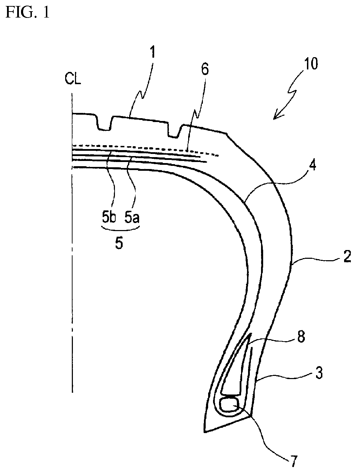

FIG. 1 is a right-half cross-sectional view of one suitable example of a pneumatic tire according to the present invention.

MODE FOR CARRYING OUT THE INVENTION

Hereinafter, an embodiment according to the present invention will be described in detail with reference to the drawing.
FIG. 1 is a right-half cross-sectional view of one suitable example of a pneumatic tire according to the present invention. The illustrated tire 10 comprises a tread portion 1 forming a contact portion, a pair of side portions 2 continuing from both sides of the tread portion 1 and extending inward in the tire radial direction, and a bead portion 3 continuing from the inner circumference side of each of the side portions 2, and the tread portion 1, the side portion 2, and the bead portion 3 are reinforced by a carcass 4 composed of one sheet of a carcass ply toroidally extending between one bead portion 3 to the other bead portion 3. As illustrated in the figure, in the tire 10 according to the present invention, a belt 5 composed of two layers of belt layers 5a, 5b may be arranged on the outer side of the tread portion 1 of the carcass 4 in the tire radial direction, and a belt reinforcing layer 6 may be arranged on the outer side of the belt 5 in the tire radial direction.
In the tire 10 according to the present invention, the reinforcing cord of the carcass ply is a cord including an aramid fiber, and the reinforcing cord has a upper twist coefficient T represented by the following formula:

$$ T = N \times 10^{-3\,X} \sqrt{\{(0.125 \times D/2)/\rho\}} $$

(in the formula, N represents the twist count (count/10 cm) of the cord, D represents the total fineness of the cord, and the ρ represents the density of the cord) of 0.5 or higher. When the cord includes an aramid fiber and the upper twist coefficient T is 0.5 or higher, the fatigue resistance may be improved. The cord includes an aramid fiber, the case rigidity is improved, thereby improving the steering stability. Suitably, the upper twist coefficient T is from 0.5 to 0.8.
Here, in the pneumatic tire according to the present invention, the reinforcing cord of the carcass ply is a cord including an aramid fiber, and may be a cord composed only of an aramid fiber, or may be a so-called hybrid cord including other organic fibers. However, in order to favorably obtain the above-described effect, the ratio of the aramid fiber to the reinforcing cord of the carcass ply is preferably 50% or higher. The cord having aramid fiber may be a spun yarn. The angle of the carcass ply is preferably in the radial direction, and specifically is about ±15° with respect to the radial direction.
In the tire 10 according to the present invention, the total fineness of the reinforcing cord is 1,800 dtex or lower, and at the same time, the end count of the reinforcing cord is 55 counts /5 cm or larger. That is, by using a reinforcing cord having a small diameter, it becomes possible to make the end count high, and as a result, an interval between the reinforcing cords becomes small, thereby preventing a cut, and therefore, the cut resistance becomes excellent. Since the case rigidity can be made larger, the steering stability can be further improved.
From such a point of view, the lower limit value of a yarn is preferably 500 dtex or higher, and more preferably 550 dtex or higher. The upper limit value is preferably 900 dtex or lower, and further preferably less than 700 dtex. The total fineness is 1,400 dtex or lower, and the end count is more preferably 70 or higher.
In the tire 10 according to the present invention, the total fineness of the reinforcing cord is preferably 800 dtex or higher. When the total fineness is less than 800 dtex, the strength of the carcass ply may be insufficient, and the durability of the tire may be deteriorated. In the tire 10 according to the present invention, the end count of the reinforcing cord of the carcass ply is preferably 100 counts /5 cm or smaller. When the end count is larger than 100 counts/5 cm, the productivity may be deteriorated in a cord fabric weaving process.

In the tire 10 according to the present invention, the ratio of the cross-section of the reinforcing cord to the cross-section of the carcass ply in the cord perpendicular direction is from 50 to 80%. In the tire 10 according to the present invention, when the upper twist coefficient T of the reinforcing cord of the carcass ply and the end count satisfy the above-described ranges, and in addition, the ratio of the cross-section of the reinforcing cord to the cross-section of the carcass ply in the cord perpendicular direction is in the above-described range, a cut can be prevented even when there is a local input to a side portion since the interval between the reinforcing cords is small. Since the rigidity of the carcass is improved, the steering stability can also be improved at the same time. Here, the ratio (occupied area) of the cross-section of the reinforcing cord was calculated by the following calculation formula:

$$(occupied\ area) = (diameter\ of\ reinforcing\ cord) / \{(diameter\ of\ reinforcing\ cord\ ) +$$

$$(interval\ of\ adjacent\ reinforcing\ cords)\} \times 100.$$

Although, in the illustrated tire 10 according to the present invention, the carcass 4 is composed of one carcass ply, in the tire 10 according to the present invention, there may be two or more carcass plies. In the illustrated example, on the outer side of the crown region of the carcass 4 in the tire radial direction, the belt 5 composed of two layers of a first belt layer 5a and a second belt layer 5b is arranged, and the number of the belt layers is not limited thereto. For the first belt layer 5a and the second belt layer 5b, those formed by a plurality of steel cords oriented in parallel to the tire width direction without being twisted together, being embedded in rubber can be used, and for example, the first belt layer 5a and the second belt layer 5b may be arranged to be crossed with each other between the layers to form a crossing belt.

Further, in the illustrated tire 10, a belt reinforcing layer 6 is arranged on the outer side of the belt 5 in the tire radial direction. Since the reinforcing cord of the belt reinforcing layer 6 is used for the purpose of securing the tensile rigidity in the tire circumferential direction, a cord composed of a highly elastic organic fiber is preferably used. For the organic fiber cord, an organic fiber cord such as an aramid, a polyethylene naphthalate (PEN), a polyethylene terephthalate, a rayon, a zylon (registered trademark) (polyparaphenylene benzobisoxazole (PBO) fiber) or an aliphatic polyamide (nylon) can be used.

Still further, in the tire according to the present invention, although not illustrated, a reinforce member such as an insert, a flipper, a side reinforcing layer may be arranged. Here, an insert means a reinforcing member (not shown in Figure) obtained by arranging a plurality of highly elastic organic fiber cords to be rubberized which is arranged from the bead portion 3 to the side portion 2 in the tire circumferential direction. A flipper means a reinforcing member obtained by arranging a plurality of highly elastic organic fiber cords to be rubberized which is arranged between a body portion extending between the bead cores 7 and a turn-up portion turned up around the bead core 7 of a carcass ply and which encompasses the bead core 7 and at least a portion of a bead filler 8 which is arranged on the outer side of the bead core 7 in the tire radial direction. The angles of the insert and the flipper are preferably from 30 to 60° with respect to the circumferential direction.

In the illustrated tire, the bead core 7 is embedded in each of the pair of bead portions 3, and the carcass 4 is turned up around the bead core 7 from the inner side to the outer side of the tire to be engaged, but how the carcass 4 is engaged is also not limited thereto. For example, at least one carcass ply of the carcass plies constituting the carcass 4 may have a so-called envelope structure in which a carcass ply is turned up around the bead core 7 from the inner side to the outer side in the tire width direction, and the end of the turn-up is located between the belt 3 and the crown portion of the carcass 2. Still further, a tread pattern may appropriately be formed on the surface of the tread portion 1, and an inner liner (not shown in the Figure) may be formed on the innermost layer. In the tire 10 according to the present invention, as a gas to fill the tire, a normal air or an air whose oxygen partial pressure is changed, or an inert gas such as nitrogen can be used. The tire according to the present invention is suitable for a pneumatic tire for a passenger car.

EXAMPLES

In the following, the present invention will be described in more detail by way of Examples.

< Reference Examples 1,2, 4 and 6, Examples 3 and 5 and Comparison Examples 1 to 4 >

A pneumatic tire comprising a left-right pair of bead portions and side portions and a tread portion continuing between both side portions, and comprising a carcass as a skeleton toroidally extending between the bead portions having a tire size of 195/65R15 was manufactured. The carcass was composed of one carcass ply, and on the outer side of a crown portion of the carcass in the tire radial direction, two layers of belt layers (material: steel cord (1×5)) crossing each other at an angle of ±20° with respect to the tire circumferential direction were arranged. The total fineness, the end count, the upper twist coefficient, and the ratio (in the Tables, indicated as "occupied area") of the cross-section of the reinforcing cord to the cross-section of the carcass ply in the cord perpendicular direction of the reinforcing cord of the carcass ply are as listed on Table 1 and Table 2. By using the obtained tires, the cut resistance, the steering stability, and the light-weightness were evaluated. The evaluation procedures are as follows.

< Cut Resistance >

A test was performed in which a metal square pipe 8 cm on a side was arranged on a road surface, and a test vehicle rode over the square pipe at an angle of about 30 degrees in a state in which each test tire was mounted on front wheels of the test vehicle, the internal pressure was adjusted to 220 kPa, and the average load on each test tire was 550 kg. The test speed, starting at 30 km/h, was increased by 5 km/h, and a speed at which a reinforcing cord of a side portion was cut was defined as a cut speed for the tire. In the case of being equivalent to a conventional tire, the evaluation was △; in the case of being superior to a conventional tire, the evaluation was ○; in the case of being very superior to a conventional tire, the evaluation was ◎; and in the case of being inferior to a conventional tire, the evaluation was ×.

< Steering stability >

A vehicle in which test tires were mounted on four wheels conducted a straight traveling, a lane change, and a cornering traveling to perform an overall evaluation of the steering stability. As the result, an average value of the steering stability for two test drivers was determined, and in the case of being equivalent to a conventional tire, the evaluation was △; in the case of being superior to a conventional tire, the evaluation was ○; in the case of being very superior to a conventional tire, the evaluation was ◎; and in the case of being inferior to a conventional tire, the evaluation was ×.

< Tire Weight >

The weight of each tire was measured, and in the case of being equivalent to a conventional tire, the evaluation was △; in a case in which the weight was reduced compared with a conventional tire, the evaluation was ○; in a case in which the weight was considerably reduced compared with a conventional tire, the evaluation was ◎; and in a case in which the weight was increased compared with a conventional tire, the evaluation was ×.

[Table 1]

| | Example 1 | Example 2 | Example 3 | Example 4 | Example 5 | Example 6 |
|---|---|---|---|---|---|---|
| Cord type | Aramid | Aramid | Aramid | Aramid | Aramid | Aramid |
| Fineness (dtex/count) | 900/2 | 1,800/1 | 550/2 | 900/2 | 670/2 | 830/2 |
| Upper twist coefficient | 0.5 | 0.5 | 0.5 | 0.75 | 0.6 | 0.6 |
| End count (count /5 cm) | 55 | 55 | 70 | 75 | 60 | 60 |
| Occupied area (%) | 57 | 57 | 56 | 77 | 53 | 59 |
| Cut resistance | ○ | ○ | ○ | ◎ | ○ | ○ |
| Steering stability | ○ | ○ | ○ | ◎ | ○ | ◎ |
| Tire weight | ○ | ○ | ◎ | ○ | ◎ | ◎ |

Examples 1,2, 4 and 6 are reference examples, not according to the invention.

[Table 2]

|  | Example 7 | Example 8 | Comparative Example 1 | Comparative Example 2 | Comparative Example 3 | Comparative Example 4 |
|---|---|---|---|---|---|---|
| Cord type | Aramid | Aramid | Aramid | Aramid | Aramid | Aramid |
| Fineness (dtex/ count) | 670/2 | 550/2 | 1670/2 | 900/2 | 1670/2 | 900/2 |
| Upper twist coefficient | 0.7 | 0.8 | 0.4 | 0.4 | 0.5 | 0.3 |
| End Count (count /5 cm) | 80 | 95 | 32 | 32 | 50 | 50 |
| Occupied area (%) | 71 | 76 | 45 | 33 | 70 | 51 |
| Cut resistance | ◎ | ◎ | Δ | Δ | × | Δ |
| Steering stability | ◎ | ◎ | × | × | Δ | ○ |
| Tire weight | ◎ | ◎ | × | ○ | × | ○ |

As seen from Table 1 and Table 2, all of the cut resistance, the steering stability, and the light-weightness of the tire according to the present invention were improved.

DESCRIPTION OF SYMBOLS

1    tread portion

2    side portion

3    bead portion

4    carcass

5    belt

6    belt reinforcing layer

7    bead core

8    bead filler

10    pneumatic tire (tire)

**Claims**

**1.**   A pneumatic tire (10) comprising a carcass (4) composed of at least one carcass ply as a skeleton, wherein:

a reinforcing cord of the carcass ply comprises an aramid fiber,
the upper twist coefficient T represented by the following formula:

$$T = N \times 10^{-3 \times} \sqrt{\{(0.125 \times D/2)/\rho\}}$$

(in the formula, N represents the twist count (count/10 cm) of the cord, D represents the total fineness of the cord, and $\rho$ represents the density of the cord) is 0.5 or higher, and
the total fineness is 1,400 dtex or lower, and the end count of the reinforcing cord in the carcass ply is 55 counts /5 cm or larger,
**characterised in that**:
the ratio of the cross-section of the reinforcing cord to the cross-section of the carcass ply in the cord perpendicular direction is from 50 to 80%.

2. The pneumatic tire (10) according to claim 1, wherein the upper twist coefficient is from 0.5 to 0.8.

3. The pneumatic tire (10) according to claim 1, wherein the end count is 70 counts /5 cm or larger.

4. The pneumatic tire (10) according to claim 1, wherein the reinforcing cord is composed of a yarn having from 500 dtex to less than 700 dtex.

**Patentansprüche**

1. Luftreifen (10), der eine Karkasse (4) umfasst, die aus wenigstens einer Karkassenlage als Skelett besteht, wobei:

ein Verstärkungskord der Karkassenlage eine Aramidfaser umfasst,
der obere Drehungskoeffizient T, der durch die folgende Formel dargestellt wird:

$$T = N \times 10^{-3 \times} \sqrt{\{(0.125 \times D/2)/\rho\}}$$

(in der Formel stellt N die Drehungszahl (Zahl/10 cm) des Kords dar, stellt D die Gesamtfeinheit des Kords dar und stellt $\rho$ die Dichte des Kords dar) 0,5 oder mehr beträgt und
die Gesamtfeinheit 1400 dtex oder weniger beträgt und die Endzahl des Verstärkungskords in der Karkassenlage 55 Zählungen/5 cm oder mehr beträgt,
**dadurch gekennzeichnet, dass**:
das Verhältnis des Querschnitts des Verstärkungskords zu dem Querschnitt der Karkassenlage in der Richtung senkrecht zu dem Kord von 50 bis 80 % beträgt.

2. Luftreifen (10) nach Anspruch 1, wobei der obere Drehungskoeffizient von 0,5 bis 0,8 beträgt.

3. Luftreifen (10) nach Anspruch 1, wobei die Endzahl 70 Zählungen/5 cm oder mehr beträgt.

4. Luftreifen (10) nach Anspruch 1, wobei der Verstärkungskord aus einem Garn besteht, das ein dtex von 500 dtex bis weniger als 700 dtex aufweist.

**Revendications**

1. Bandage pneumatique (10), comprenant une carcasse (4) composée d'au moins une nappe de carcasse comme squelette ; dans lequel :

un câblé de renforcement de la nappe de carcasse comprend une fibre d'aramide ;
le coefficient de torsion supérieur T représenté par la formule suivante :

$$T = N \times 10^{-3 \times} \sqrt{\{(0.125 \times D/2)/\rho\}}$$

(dans la formule, N représente le nombre de torsions (nombre/10 cm) du câblé, D représente la finesse totale du câblé et p représente la densité du câblé), correspond à 0,5 ou plus ; et

la finesse totale correspond à 1.400 dtex ou moins, et le nombre total du câblé de renforcement dans la nappe de carcasse correspond à 55 comptes/5 cm ou plus ;

**caractérisé en ce que** :

le rapport entre la section transversale du câblé de renforcement et la section transversale de la nappe de carcasse, dans la direction perpendiculaire au câblé, est compris entre 50 et 80% ;

2. Bandage pneumatique (10) selon la revendication 1, dans lequel le coefficient de torsion supérieur est compris entre 0,5 et 0,8.

3. Bandage pneumatique (10) selon la revendication 1, dans lequel le nombre total correspond à 70 comptes/5 cm ou plus.

4. Bandage pneumatique (10) selon la revendication 1, dans lequel le câblé de renforcement est composé d'un filament ayant un dtex compris entre 500 dtex et moins de 700 dtex.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009137446 A
- JP 3884156 B
- EP 2186652 A
- JP 5494894 A
- EP 2151332 A1